# EUROPEAN PATENT SPECIFICATION

(11) **EP 2 906 074 B1**
(45) Date of publication and mention of the grant of the patent: **02.05.2018**
(21) Application number: 13844712.3
(22) Date of filing: 11.10.2013
(51) Int. Cl.: A45C 11/00

(54) **CASE WITH INTERCHANGEABLE BACK PLATES**
GEHÄUSE MIT AUSWECHSELBAREN RÜCKPLATTEN
BOÎTIER DOTÉ DE PLAQUES ARRIÈRES INTERCHANGEABLES

(30) Priority: 12.10.2012 US 201261713155 P; 08.05.2013 US 201313890084; 14.05.2013 US 201361823165 P; 02.07.2013 US 201313933424
(43) Date of publication of application: 19.08.2015
(73) Proprietor: Cox, James, L., Austin, TX 78743 (US)
(72) Inventor: Cox, James, L., Austin, TX 78743 (US)
(74) Representative: Somervell, Thomas Richard
(86) International application number: PCT/US2013/064584
(87) International publication number: WO 2014/059301

(56) References cited:
- KR-B1- 101 226 084
- KR-U- 20120 003 703
- US-A1- 2008 023 508
- US-A1- 2011 079 619
- US-A1- 2011 089 078
- US-A1- 2011 192 857
- US-A1- 2012 252 543
- US-A1- 2012 303 520
- US-B1- 6 324 380

## Description

### TECHNICAL FIELD

Embodiments of the present invention relate generally to mobile-device carrying and/or protective cases and, in particular, to cases for cellular telephones, smartphones, satellite phones, tablets, laptop computers and other electronic devices.

### BACKGROUND

Mobile devices, also known as personal or portable electronic devices (such as cellular phones, smart phones, tablets, laptop computers, e-book readers, MP3 players, pocket PCs, and similar products) are particularly susceptible to receiving damage from being dropped, at least because they are many times per day picked up, set down, used, or mishandled. Protective cases have long been used for such mobile devices; the evolution in their design has focused, however, on the protective aspects of such cases or, at most, cases for a single use or function (such as a case that includes a pocket to store a credit card). Aside from the limitation of a single use, existing cases limit the owner or user to a single look or design. If a different function or design is desired, a different case must be used. Switching between cases having different functions weakens the cases mechanically, eventually leading to their breaking. A need therefore exists for a more versatile, functional, and aesthetically configurable case. US2011/079619 discloses a mechanism for mounting a mobile device on the exterior of a person's clothing. US2011/089078 discloses positioning of a cell compartment proximate to the front surface of a mobile device, such that the user has to flip over the cell compartment before using the device. US2011/192857 discloses attachment mechanisms that are embedded within a case or article, and which form a protruding non-detachable portion.

### SUMMARY

According to the prsent inention there is provided a system comprising a protective case and an article as set forth in claim 1. In general, various aspects of the systems and methods described herein include cases for mobile devices. A case is sized and shaped to securely and aesthetically accommodate a mobile device. The case has a back, which may include a back plate, that has accommodations for the use of the mobile device that may include, for example, apertures for camera lenses, microphones,
speakers, antennae, and the like, as determined by the particular mobile device secured or encased. Likewise the back face of the case, which may include or accommodate a back plate, may be shaped to include reliefs or protrusions, such as to accommodate batteries, memory, SIM cards, and so on. The back plate may mirror such reliefs or protrusions.

This disclosure also describes and illustrates back plates for protective cases for mobile devices where the back plate is configured to port one or more article or device. The back face of the case, which may include a back plate, has accommodations for the use of the mobile device. Those accommodations may include, for example, apertures, reliefs, or protrusions. The back includes structure or material that will conveniently and reversibly secure the case to another article or device. The back thus might include material that would adhere to magnetized material. The back plate likewise might be shaped to snap, reversible clip to, releasably latch to, connect, fasten, or reversibly lock to another device or article. The back plate could include a material such as one or more of the components of VELCRO, fibrillar adhesives, microfiber cloth, rubber, or adhesive materials, for example.

This disclosure also describes and illustrates articles and devices that can secure reversibly to the back face of a mobile device case. One such article is a protective plate that largely conforms to the surface contours of the back of the mobile device case. Such a plate could include one or more apertures to accommodate a camera lens, a microphone, a speaker, antennae, and the like, as determined by the particular mobile device protected.

Another such article is a decorative plate or cover. Such could sport the texture or material of the user's choice. Such could also include material affiliated with a university, town, event, or team. Such could include photos, logos, flags, mascots, art, or patterns. The back plate could accommodate images, designs, woods, acrylics, or materials of the user's choice. Such a back plate thus might include material or be configured to reversibly adhere or attach to the mobile device case. The back plate could include material that would be drawn to magnetized material. The back plate likewise might be shaped to snap, reversibly clip to, releasably latch to, connect, fasten, or reversibly lock to the mobile device case. The back plate could include a material such as one or more of the components of VELCRO, fibrillar adhesive, microfiber cloth, rubber, or adhesive materials, for example.

This disclosure also describes and illustrates articles and devices that can secure reversibly to the back face of a mobile device case, where such article or device has a utilitarian function. The article or device will thus reversibly mate to, couple to, and adhere to, a back plate. The mobile device and the reversibly detachable and reattachable article(s) or device(s) can be carried comfortably and conveniently as one. The mobile device and the reversibly detachable and reattachable article(s) or device(s) can be separated for the quick and convenient use of the article or device reversibly mated to, adhered to, or coupled to the mobile device. The decoupling can be accomplished without unsheathing the mobile device from the protective case.

Thus, a back plate of a mobile device case may include material or be configured to reversibly adhere or attach to a utilitarian article or device, or in an alternative embodiment, to a case or attachment that could hold or secure that utilitarian device or article. The utilitarian device or article could include material or be configured such that it would mate with the back of the case. The utilitarian article or device might be drawn to magnetized material. The utilitarian article or device likewise might be shaped to snap, reversibly clip to, releasably latch to, connect, fasten, or reversibly lock to the back plate of the mobile device case. The utilitarian article or device or the case or attachment for securing or containing it could include a material such as one or more of the opposed adherent components of VELCRO, fibrillar adhesive, microfiber cloth, or material to which such adheres reversibly, for example.

As described hereafter, other aspects of these inventions exist, for example, in details of exemplary cosmetic and non-cosmetic product constructs, as well as the details of manufacture. Thus, the summary of a few aspects of the inventions is not to be interpreted as defining the inventions.

These and other objects, along with advantages and features of the present invention herein disclosed, will become more apparent through reference to the following description, the accompanying drawings, and the claims. Furthermore, it is to be understood that the features of the various embodiments described herein are not mutually exclusive and can exist in various combinations and permutations.

### BRIEF DESCRIPTION OF THE DRAWINGS

In the drawings, like reference characters generally refer to the same parts throughout the different views. In the following description, various embodiments of the present invention are described with reference to the following drawings, in which:
FIG. 1 is an exploded orthogonal view of an embodiment of the mobile device case showing a back plate in working relationship;
FIG. 2a is a front view of an embodiment of the mobile device case (reversibly detachable back plate not shown);
FIG. 2b is a back view of an embodiment of the mobile device case (reversibly detachable back plate not shown);
FIG. 2c is a back view of an embodiment of a back plate for a mobile device case;
FIG. 2d is a front view of an embodiment of a back plate for a mobile device case;
FIG. 2e is a side view of an embodiment of a mobile device case showing where one side forms an aperture to accommodate a mobile device (not shown) and having reversibly attachable back plate in place;
FIG. 2f is a side view of an embodiment of a mobile device case shown having reversibly attachable back plate in place;
FIG. 3 is an exploded orthogonal view of an embodiment of the mobile device case including the back plate and the attachable device in working relationship including in phantom a representative mobile device;
FIG. 4 is an orthogonal view of the front of an embodiment of the mobile device case with attached device in its environment;
FIG. 5 is a side view of the back plate and one side of an embodiment of the mobile device case with attached device in its environment showing through an aperture in the side of the case an exemplary mobile device;
FIG. 6 is a side view of a functional accessory detached from an embodiment of the mobile device case;
FIG. 7 is an exploded orthogonal view of a functional accessory detached from an embodiment of the mobile device;
FIG. 8 is an orthogonal view of an embodiment of the protective case in its environment showing through the front face an exemplary smartphone;
FIG. 9 is a back view of an embodiment of the protective case;
FIG. 10 is one side view of an embodiment of the protective case;
FIG. 11 is an orthogonal front view of an embodiment of the protective case in its environment show through front face an exemplary smartphone;
FIG. 12 is an orthogonal view of the back and side of an embodiment of the protective case;
FIG. 13 is orthogonal view of the back of an embodiment of the protective case to highlight the formation of apertures by the case materials;
FIG. 14 is an orthogonal view of an embodiment of the mobile device case with multiple attachable articles; and
FIG. 15 is a plurality of views of an embodiment of the mobile device case with multiple attachable articles.

### DETAILED DESCRIPTION

Described herein are systems of a case sized and shaped to integrate a mobile device with another article or device interchangeably. The embodiments described or illustrated allow the combination of a mobile device and the interchangeable article to be carried simultaneously as one. In one exemplary embodiment, the interchangeable article is a protective back plate that has particular value to the user because of personal, affiliative, or aesthetic considerations. In another exemplary embodiment, the mobile device case forms a sleeve to hold a smartphone and an interchangeable device, for example a satellite communications device. In another exemplary embodiment, the case has a back that reversibly adheres, mates, couples, or attaches to another utilitarian article or device so that the two (or more) are easily carried together. The interchangeable devices can be easily removed from and reunited with the case for use without unsheathing the case from the mobile device.

As used herein, unless the context dictates otherwise, terms such as "coupled," "mated, " "adhered, " "attached" and so on mean and are intended to mean directly (in which two or more items are in contact with each other) and indirectly (in which at least one additional item is located between the at least two items). Therefore, terms such as "coupled to," "mated to," "attached to" and "adhered to" are used synonymously with "coupled with," "mated with," "attached with," and "adhered with". Preferably, such coupling, mating, adhering, and attaching are readily reversible and repeatable.

The discussion that follows describes many examples and embodiments of the inventive subject matter. Some aspects of carrying out the invention are described below as preferred embodiments with reference to the accompanied drawings, in which like features are indicated by like numerals.

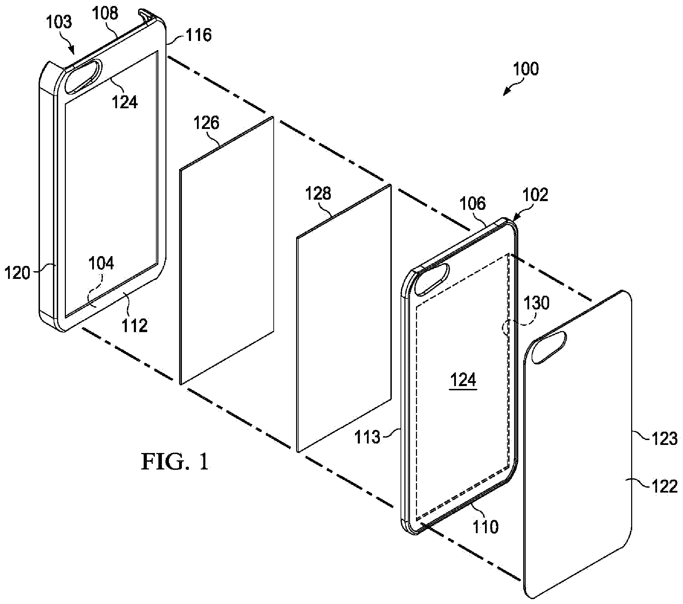

FIG. 1 is an exploded orthogonal view of an embodiment of the mobile device case 100 showing a detachable, interchangeable back plate 102 in its working relationship with the back face 104 of mobile device case 100. Back plate 102 is sized and shaped to conform to back face 104 of mobile device case 100. Thus, when back plate 102 is substantially flush against back face 104 of mobile device case 100, first minor edge 106 of back plate 102 is substantially parallel to first minor edge 108 of back face 104 of mobile device case 100. Likewise, when back plate 102 is substantially flush against back face 104 of mobile device case 100, second minor edge 110 of back plate 102 is substantially parallel to second minor edge 112 of the back face 104 of mobile device case 100. When back plate 102 is substantially flush against back face 104 of mobile device case 100, first major edge 113 of back plate 102 is substantially parallel to first major edge 120 of the back face 104 of mobile device case 100. Likewise, when back plate 102 is substantially flush against back face 104 of mobile device case 100, second major edge 114 (hidden) of back plate 102 is substantially parallel to second major edge 116 of the back face 104 of mobile device case 100. Continuing with FIG. 1, major exterior surface 122 of back plate 102 is shown substantially flat, meaning substantially two dimensional, without significant depression, relief, or variation in surface plane 123. Such an alternative embodiment is suited in particular for user involvement in choice of surface decoration, including the choice of surface material. Specifically, back plate 102 may be made having surface plane 123 having exterior surface 122 covered in any color or colors and in any material or materials, such as those that resemble copper, silver, gold, various common or exotic woods, carbon fiber, foam, rubber grip tape, mesh, textiles such as fabrics, wall papers, beads, tiles, leathers, hides, furs, and so on. Likewise, such an embodiment is amenable to the application of photographs, designs, and art provided by the user. Back plate 102 is designed to be relatively inexpensive to create using 3D printing, injection molding, or other fabrication techniques. As such, it is envisioned that organizations, fund-raising groups, teams, universities, artists and designers will produce a limitless variety of designs and patterns for surface plane 123 having exterior surface 122.

In another embodiment, surface plane 123 having exterior surface 122 may be raised or otherwise include contours. Such raising and/or contouring may enhance the ergonomics of the device or devices. Because mobile device case 100 is configured to reversibly and interchangeably mate with a variety of back plates 102, a variety of back plate configurations are provided for. As also shown in the exploded orthogonal view of FIG. 1, back plate 102 can be interchangeable. Back plate 102 is reversibly detachable to back face 104 of mobile device case 100 using a variety of techniques. Protective case 100 is shown with a recess or cutout 124 in back face 104. Recess 124 can receive an insert 126 that can include material that could be magnetic or drawn to magnetized material. Thus, insert 126 could be metallic or magnetized.

Correspondingly, insert 128 is configured to be placed in recess 130 (shown by dashed lines to represent the hidden face of back plate 102). Insert 126 and insert 128 can be retained in recess 124 and recess 130 using tension, friction, glue, mechanical fasteners, or otherwise. Likewise, insert 126 and insert 128 can be retained without the use of recesses. Insert 126 and insert 128 can include magnetic material, or one can include magnetic material and the other can include material attracted to a magnet.

In the exemplary embodiment of FIG. 1, mobile device case 100 can accommodate a communications device, such as a smartphone, and be sized to detachably connect to the device. As shown in FIG. 1, in one preferred embodiment, mobile device case 100 has six primary faces. As shown, in one preferred embodiment substantially the entire front face 103 (not shown) of mobile device case 100 is open to allow for a face of a device, for example a smartphone, to be accessible while the smartphone is placed with mobile device case 100. Alternatively, back face 104 and back plate 102 can be configured to reversibly mate, couple, or adhere to each other by mechanical or other means. One or the other or both back face 104 or back plate 102 can be shaped to snap, or reversibly clip to, releasably latch to, connect, fasten, or reversibly lock to the other. Either of back face 104 or back plate 102, or both may include a material such as one of the components of VELCRO, fibrillar adhesive, microfiber cloth, or adhesive materials, for example.

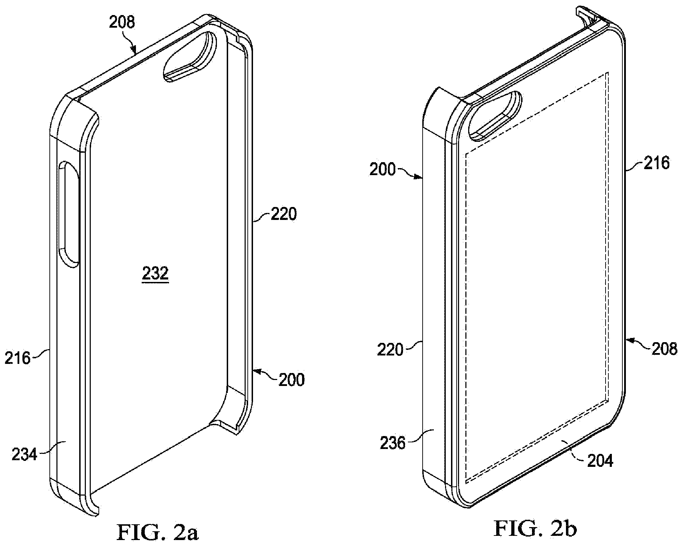

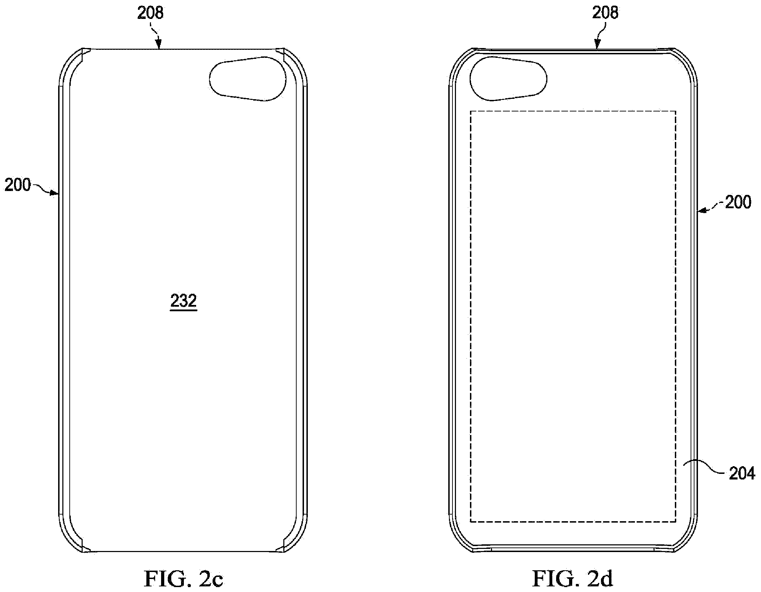

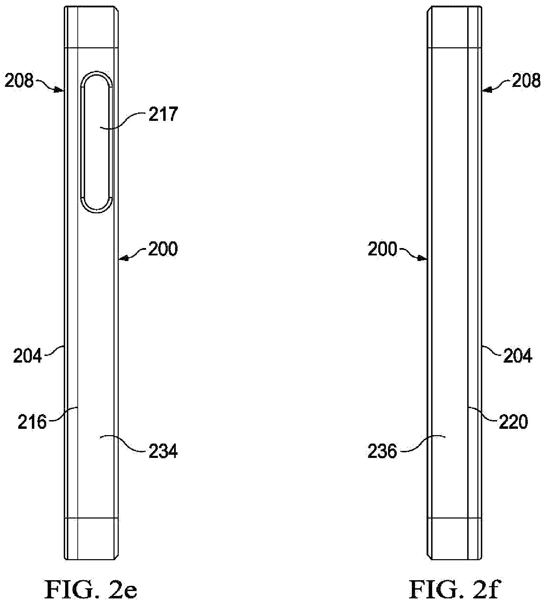

Turning now to FIGS. 2a-f, FIG. 2a is a front view of an embodiment of the mobile device case 200 having interior surface 232 of back face 204 exposed and opposed exterior surface 222 (hidden). There may be one or more planes and surfaces intercalated between interior surface 232 of back face 204 and exterior surface 222. In FIG. 2a, exterior surface 234 of major side 216 of mobile device case 200 faces the observer. The exterior surface 236 (hidden) of opposed major side 220 faces away from the viewer observer in FIG. 2a. FIG. 2b is a back view of an embodiment of mobile device case 200 with a back plate. In FIG. 2b, exterior surface 236 of major side 220 is exposed to the observer, as is back face 204 of back plate 208. FIG. 2c shows the interior surface 232 of mobile device case 200. Interior surface 232 may be adorned even though it typically is not be visible when mobile device case 200 is coupled with a mobile device, such as a smartphone. FIG. 2d shows a back view of an embodiment of back plate 208 for a mobile device case 200. Such embodiments may allow user involvement in the choice of surface decoration for exterior surface face 204; the user may, for example, select from one of a plurality of available decorations and/or create a custom decoration (based on, for example, a user-submitted photo or picture). FIG. 2e is a side view of a mobile device case 200 showing where side surface 234 and side 216 form aperture 217 to accommodate a mobile device (not shown) and having an embodiment of back plate 208 in place. FIG. 2f is a side view of an embodiment of a mobile device case 200 also showing an embodiment of back plate 208 in place substantially flush with back face of mobile device case 200.

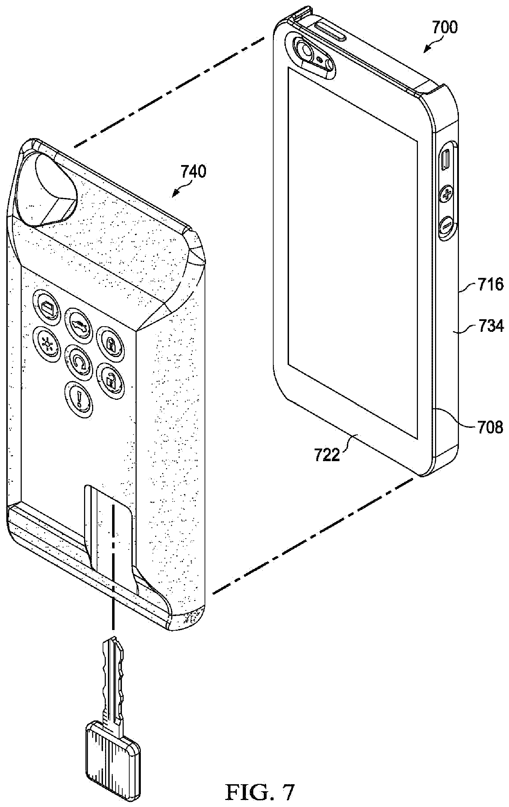

In accordance with an exemplary embodiment, back plate 208 can also be the side of an article or device, or can be configured to reversibly mate to, couple to, adhere to, or attach to an article or device including, for example, a mobile hot spot; a GOPRO video recorder; a paper notepad; a mini epinephrine pen; a inhaler; a vaporizer; a combination lock; a foldable eyeglasses case; a computer mouse; a finger pad; a BLUETOOTH headset holder; an APPLE IPOD; an MP3 player; a digital voice recorder; a shoulder rest; a GPS device; a satellite communication device; a compass; a whistle; a first aid kit; a data expansion pack; a video game controller; a laser pointer; access key card; cellular signal booster; full range AM/FM transmitter; a pedometer, an accelerometer; a speaker; a flash light; a digital scale; a thermostat; a key slot; a key ring; a toll tag; a pill compartment; a pen; a birth control compartment; an FM transmitter; a magnifying glass or plastic card; a GIGAPET, a card deck holder; a fan that circulates bug repellant or aromas; a baby monitor; a flash drive; a credit card reader; stylus; a fish eye lens; a heart rate monitor; a glucose meter with lancet and extra test strips; a blood pressure reader; a floating device designed to keep mobile device 200 afloat; a WI-FI modem; a projector screen; a bottle opener; a battery pack; pepper spray; a makeup compartment; an ETCH-A-SKETCH; a roller maze; a watch face; a compartment for, for example, a condom, coins, tickets, a tampon, earbuds, lip balm, lotion, sunscreen, utility tool, level, band aids, perfume or cologne, sanitizer, contact lenses, cigarettes, lighter, electric cigarettes, flask, breathalyzer, credit cards, business cards, gum, mints, or cough drops, measuring tape, mirror, money clip or a smart key (as shown in FIG. 7). It is to be understood that this is not meant to in any way limit the application of these inventions to those disclosed devices. For example, related or unrelated devices may also be applicable. All of the aforementioned items, as well as the following items could be attached to the mobile device as shown, for example, in FIG. 7.

The size, including width and height, as well as the configuration of reversibly attachable article or device (not shown) may vary depending on the shape and size of mobile device case 200. Back plate 208 may accommodate different mobile devices of different sizes, including for example, smartphones, APPLE IPADS or IPODS, laptop computers, and tablets.

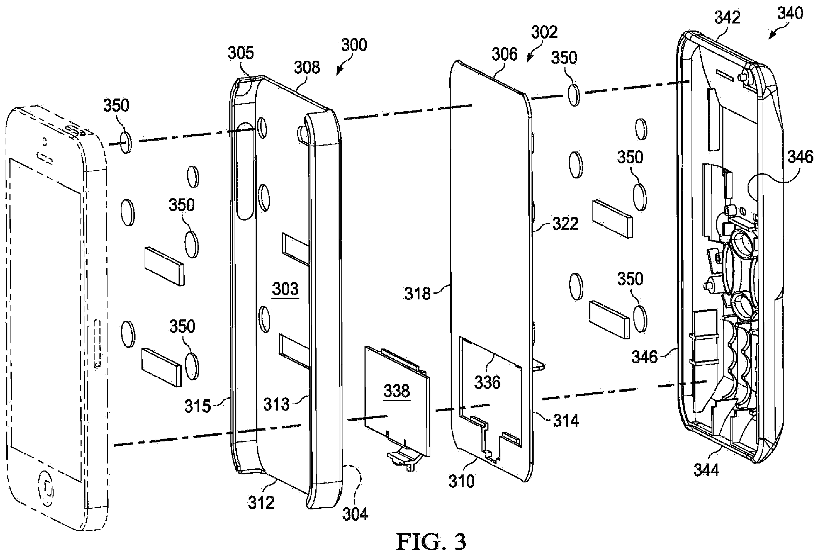

FIG. 3 is an exploded orthogonal environmental view of one embodiment of mobile device case 300. FIG. 3 shows one embodiment of detachable, interchangeable back plate 302 in its working relationship with back face 304 (hidden from the observer and not shown) of mobile device case 300. Back plate 302 is sized and shaped to conform to back face 304 of mobile device case 300. In the embodiment shown, detachable, interchangeable back plate 302 forms an aperture 336 sized and located to accommodate battery access for the device or article to be reversible attached to, mated to, coupled to, or adhered to mobile device 300 using back plate 302. Detachable, interchangeable back plate 302 in this embodiment forms aperture 336 sized and located to accommodate battery access cover 338 for use in reversibly attachable article or device 340, which as illustrated could be a satellite communication or GPS device. As described elsewhere in this specification, however, the back plate 302 may be associated with any detachable article, device, or plate, such as a credit-card reader, key/credit-card storage wallet, or decorative plate.

As shown in the preferred embodiment of FIG. 3, back plate 302 may be configured to be positioned substantially flush against back face 304 of mobile device case 300. When back plate 302 is substantially flush against back face 304 of mobile device case 300, first minor edge 306 of back plate 302 is substantially parallel to first minor edge 308 of mobile device case 300. Likewise, when back plate 302 is substantially flush against back face 304 of mobile device 300, first minor edge 306 of back plate 302 is substantially parallel to first minor edge 342 of reversibly attachable article or device 340, which in FIG. 3 is a satellite communication or GPS device. When back plate 302 is substantially flush against back face 304 of mobile device case 300, second minor edge 310 of back plate 302 is substantially parallel to second minor edge 312 of the back face 304 of mobile device 300. Likewise, when back plate 302 is substantially flush against back side 304 of mobile device 300, second minor edge 310 of back plate 302 is substantially parallel to second minor edge 344 of reversibly attachable article or device 340.

When back plate 302 is substantially flush against back face 304 of mobile device case 300, first major edge 314 of back plate 302 is substantially parallel to first major edge 313 of the back face 304 of mobile device 300. Likewise back plate 302 is substantially flush against back face 304 of mobile device case 300, second major edge 318 of back plate 302 is substantially parallel to second major edge 315 of back face 304 of mobile device case 300. When back plate 302 is substantially flush against back face 304 of mobile device case 300, first major edge 314 of back plate 302 is substantially parallel to first major edge 346 of the reversibly attachable article or device 340.

As shown, mobile device case 300 can be secured to a mobile device for example by lip 305. Lip 305 may extend slightly from two or more faces such as the front face 303 or side faces 313 and 315 of mobile device case 300. Thus, side faces 313 and 315 may be used in this embodiment to hold reversibly attachable article or device 340 in place using lip 305. The intersections of each of such face help secure a smartphone or other device by mobile device case 300. Any slight flexibility of the material from which the mobile device case 300 is made allows for a smartphone or other mobile device to be snapped in and out of mobile device case 300 with minimal force, but exerts sufficient restraining force to prevent the smartphone from falling from protective case 300 under its own weight or the magnitude of forces typically associated with normal operation of a mobile device.

Continuing with FIG. 3, major interior surface 322 (facing away from the observer in FIG. 3) of back plate 302 is shown as reversibly detachable to back face 304 of mobile device case 300 using a set of magnets 350. In other words, the magnetic attraction of magnets 350 disposed in or otherwise mechanically attached to the electronic device 340 to magnets 350 disposed in or otherwise mechanically attached to the case 300 secures the device 340 to the case 300. In this embodiment, when the device or article 340 is secured to the case 300, the face of the reversibly attached article or device 340 becomes the major exterior surface (i.e., the interior face 304 of the case 300 is wholly or partially obscured by the article or device 340). Although magnets 350 in one embodiment may comprise six disc and two bar magnets, the number, size, shape, strength and placement of magnets 350 may vary (i.e., be a design or manufacturing choice). In other instances the number, size, shape, strength and placement of magnets 350 may be influenced by the identity and requirements of either the mobile device or the reversibly detachable article or device 340. In other embodiments, as shown in FIG. 1, the magnets may be sheet magnets 126, 128. Likewise, this disclosure includes magnets 350 as a component of back plate 302 with or without recesses therein to accommodate them.

The magnets 126, 128, 350 may vary in size, position, and strength. In one embodiment, the magnets 126, 128, 350 produce enough attractive force between the article 340 and case 300 such that the two components do not unintentionally or undesirably separate after attachment therebetween due to, for example, the dropping of the components, jostling of the components in a pocket, backpack, or other container, or even through normal use of the components. In this embodiment, however, the magnets 126, 128, 350 do not produce so much attractive force that intentional separation of the components becomes difficult or impossible. In various embodiments, the attractive force produced between the magnets 126, 128, 350 varies in accordance with a user preference - a young or old user having weak hand strength may prefer a weaker attractive force, for example, while other users may prefer a stronger attractive force for its increased robustness in maintaining the connection between the article or device 340 and the case 300. In some embodiments, the magnets 350 in the article 340 vary in strength in accordance with the size or weight of the article 340 - heavier/larger articles 340, such as a satellite communication device or credit-card reader, may have larger/stronger/more magnets 350, while slimmer/lighter articles 340, such as a decorative plate, may have smaller/weaker/fewer magnets 350. In other embodiments, the magnets 350 may be sized or positioned in the article 340 to account for and defend against the placement and direction of anticipated forces applied to the article 340 - for example, in the case of a credit-card reader, magnets 350 may be positioned to keep the article 350 secure despite a side-to-side (or other) swiping motion inherent in swiping credit cards and any associated force transmitted to the article 340.

In one embodiment, mechanical means prevents the article 340 from sliding or otherwise moving laterally with respect to the case 300 when the two components are connected together (via magnets 350 or other means). These mechanical means may be, for example, studs on one component mated to divots or recesses on the other; a lip or other protrusion on one component that mates with an outside edge or edges of the other; a rail or other raised protrusion on one component that mates with a groove or trench on the other; or any other such mechanical means. These rails, lips, or studs prevent or reduce sliding between the components, thereby increasing the effectiveness of the magnetic bond therebetween at least because, typically, breaking or otherwise overcoming a magnetic bond requires less force or other energy input if the magnets (or components attached to said magnets) are slid past each other, as opposed to being pulled directly apart from each other.

In one embodiment, the case 300 allows access to a USB, docking, or other port disposed on the smartphone or other device. Many docking stations exist for docking (i.e., mechanically connecting) a smartphone or other such device to a larger electronic component that provides additional features; for example, an audio output device (e.g., receiver and speakers) may include a docking port for receiving a smartphone, thereby allowing music stored on the smartphone (e.g., MP3 files) to be played on the speakers through the receiver. Many existing protective cases are too thick for, or otherwise prevent, docking of said phone while it is connected to said case. The case 300 of the present invention allows docking of a smartphone held within a docking station; in one embodiment, the article or device 340 is first detached from the case 300 before docking.

In one preferred embodiment, back plate 302 can be configured to reversibly mate to, couple to, or adhere to or with device or article 340 by physical or mechanical means, rather than by magnetic or electromechanical means. Back plate 302 can be shaped to snap, or reversibly clip to, releasably latch to, connect, fasten, or reversibly lock to article or device 340. Back plate 302, or article 340 may include a material such as one of the adherent components of VELCRO, fibrillar adhesive, microfiber cloth, or adhesive materials, for example. The magnets 350, or other means of securing the back plate 302, may be on the front or back side of the back plate 302.

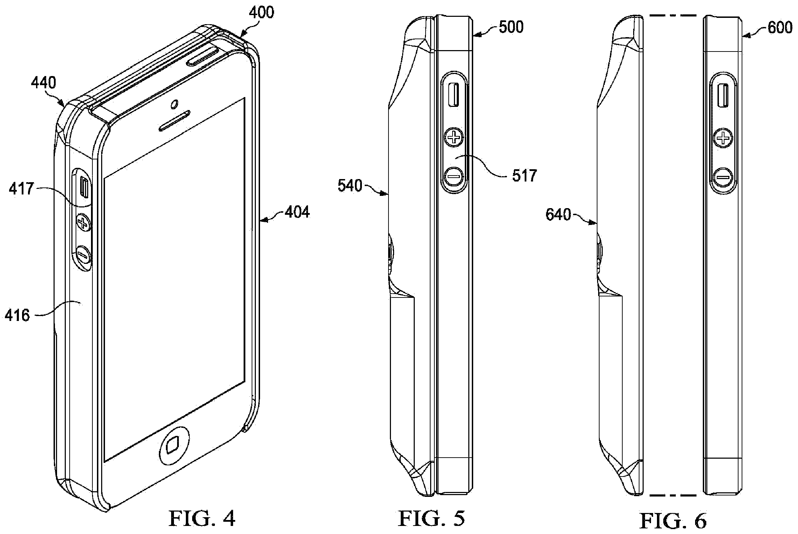

Such an embodiment is illustrated in FIG. 4, which is an orthogonal view looking toward the front of an embodiment of mobile device case 400 with reversibly attachable device 440 attached, in its working environment showing through front face 404 and side face 416 of case 400 an exemplary mobile device. In the embodiment of FIG. 4, side 416 of mobile device case 400 forms an aperture 417 for access to, in this example, three components of the mobile device. Such components might include headphone or earbud jacks, controls, or the like. In this embodiment, the four edges of reversibly attachable article or device 440 are substantially flush with the four edges of mobile device case 400. Thus, the exterior configuration of reversibly attachable article or device 440 can preferably be configured to accommodate the purpose and functions of reversibly attachable article or device 440 as well as to accommodate the use of mobile device case 400. In one preferred embodiment, mobile device case 400 may have strategically placed grips for positioning a user's hand at a location that does not interfere with the operation of reversible attachable device 440 and thus prevents a user's hand from slipping relative to the mobile device case 400. Reversibly attachable article or device 440 is easily and comfortably ported and its use is facilitated without any need to uncase or unsheathe reversibly attachable article or device 440 from mobile device case 400.

FIG. 5 is a side view showing the back and one side of an embodiment of the mobile device case 500 with a reversibly attachable device 540 attached, in their environment showing through an aperture 517 in the side of the mobile device case 500 an exemplary mobile device. In this embodiment, reversibly attachable article or device 540 is shown having a length essentially equal to the mobile device case 500. All four edges (not shown) of reversibly attachable article or device 540 may extend beyond any or all four edges of mobile device case 500. Likewise, all four edges (not shown) of reversibly attachable article or device 540 may not extend to any or all four edges of mobile device case 500. Exterior configuration of reversibly attachable article or device 540 is configured to accommodate the purposes and functions of reversibly attachable article or device 540 as well as to accommodate the use of mobile device case 500.

FIG. 6 is a side view of an embodiment that shows a reversibly attachable article or device 640 attached to a back plate (not shown) of the mobile device case 600 for reversible attachment and detachment to mobile device case 600. Back face 604 (not shown) and back plate 602 (not shown) are preferably configured to reversibly mate, couple, or adhere to each other by mechanical or other means. In the embodiment shown, magnetic coupling would work. Alternatively, one or the other or both back face 604 (not shown) or back plate 602 (not shown) can be shaped to snap, or reversibly clip to, releasably latch to, connect, fasten, or reversibly lock to the other. Either of back face 604 (not shown) or back plate 602 (not shown), or both may include a material such as one of the components of VELCRO, fibrillar adhesive, microfiber cloth, or adhesive materials, for example. The choice of mating material is made to foster maintenance of the engagement strength between mobile device case 600 and reversibly attachable article or device 640 through repeated use and multiple attachments, detachments, and reattachments.

The reversibly attached devices 540, 640 of FIGS. 5 and 6 (and/or any of the attached devices described throughout this application) may be designed/re-designed, or otherwise configured to minimize their thickness with respect to the device case 500, 600 and the electronic device connected thereto. Certain electronic devices, such as satellite communicators or credit-card readers, may originally be designed to fit within an enclosure of smallest volume by, for example, stacking batteries on top of a printed-circuit board. These sorts of designs may lead to an overall enclosure having a height and width smaller than that of the device case 500 but having an undesirably large thickness. In various embodiments, the attached devices 540, 640 are designed to have a height and width equal to or approximately equal to that of the device case 500, 600 and to thereby take advantage of that height and width to reduce thickness. For example, in one embodiment, power is provided to the devices 540, 640 via a battery connected to a printed circuit board via a wire instead of direct, spring-contact connection thereto, thereby allowing placement of the battery (or batteries) on the same horizontal plane (with respect to the main faces of the case 500, 600) as the printed circuit board. Other components of the devices 540, 640 (e.g., jacks, ports, screens, buttons, etc., and the circuitry required to drive/power/control the same) may be similar disposed on this same horizontal plane to further minimize the thickness of the attached devices 540, 640. In another embodiment, batteries having a minimal thickness (such as, for example, AAA or AAAA batteries) are used to minimize the thickness of the devices 540, 640.

Turning now to FIG. 7, FIG. 7 is an orthogonal view of an embodiment of mobile device case 700 showing back face 708 and exterior surface 722 in planar arrangement with reversibly attachable device 740. As shown, reversibly attachable device 740 is a smart key. Exterior surface 734 of major side 716 of mobile device case 700 faces the observer. The exterior surface 736 (hidden) of opposed major side 720 (hidden) faces away from the observer. In accordance with this exemplary embodiment, back plate 708 is configured to reversibly mate to, couple to, adhere to, or attach to an article or device including, as shown for example, a smart key.

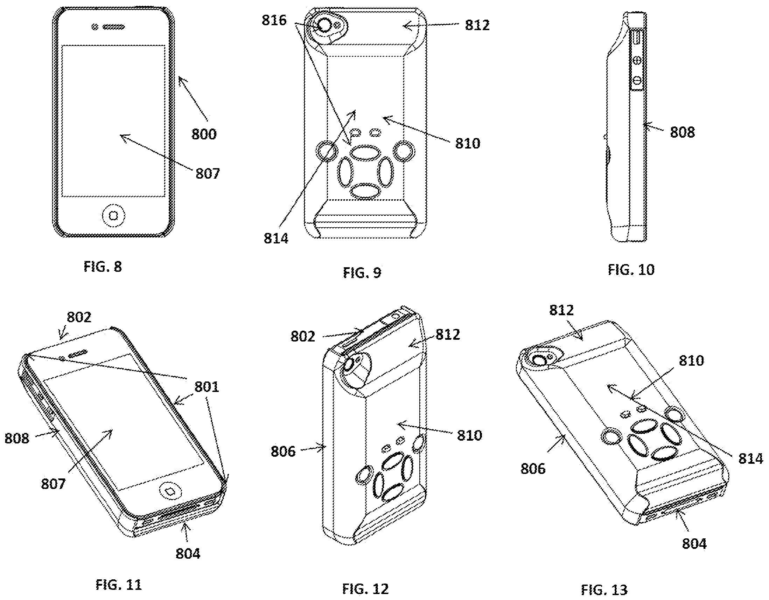

As shown in FIG. 8, another embodiment of a protective case 800 for a communications device, such as a smartphone, is sized to detachably connect to the smartphone while maintaining the functionality of the smartphone and to serve as protection for at least one other device, such as a satellite communication device, credit-card reader, or any other device. As shown in FIGS. 11 and 12, in one preferred embodiment generally has six primary faces. The five faces are the top face 802, bottom face 804, left face 806, right face 808, front face 807, and back face 810. As shown in FIG. 11, in one preferred embodiment substantially the front entire is open to allow for the face of the smartphone to be accessible while the smartphone is placed with protective case 800.

As shown in FIG. 11 and above with reference to FIG. 3, protective case 800 can be secured to the smartphone for example by lip 801. Lip 801 slightly extends from two or more faces such as top face 802, bottom face 804, left face 806, or right face 808 of protective case 800. The intersections of each of such face help secure a smartphone or other device by protective case 800. Any slight flexibility of the material from which the protective case 800 is made allows for the smartphone or other device to be snapped in and out of protective case 800 with minimal force, but exerts sufficient restraining force to prevent the smartphone from falling from the protective case 800 under its own weight or the magnitude of forces typically associated with normal operation of the smartphone. These constraints may guide the choice of construction materials. The length, height and width of each of the faces and protective case 800 can vary depending on the dimensions of the device with which the protective case 800 is to be used. In one embodiment, the smartphone is an IPHONE. Of course, other devices and smartphones can be used. Protective case 800 should be sized according to the dimensions of the smartphone or other device used.

In other embodiments, protective case 800 is convertible such that use of the satellite communications (or other) device is possible and convenient without securing protective case 800 to a smartphone. In such embodiments, top face 802, bottom face 804, left face 806, right face 808 are hingedly or otherwise suitably connected to back face 810. When protective case 800 is secured to a smartphone, top face 802, bottom face 804, left face 806, right face 808 are substantially perpendicular to back face 810. When a smartphone of this embodiment is removed from the protective case 800, top face 802, bottom face 804, left face 806, right face 808 rotate hingedly to lay flat against the satellite communications device on a plane perpendicular with back face 810. In such embodiments, each of the intersections between top face 802, bottom face 804, left face 806, right face 808 are arranged to allow such hinged rotation by, for instance, having a gap between the faces sufficient for rotation without any face blocking the motion of an adjacent face or being constructed of flexible material.

One or more apertures 816 may be disposed in the case 800 to allow access, to, for example, buttons or other controls. In one embodiment, an aperture 816 provides access for a camera lens mounted in an electronic device. The camera-lens aperture 816 may be sized to have a greater radius/circumference than that of the camera lens to thereby allow all or most of the light that would have struck the camera lens had the case 800 not be present to fall thereon. In various embodiments, the camera-lens aperture 816 increases in radius/circumference as the thickness of the case 800 (and/or components attached thereto) increases. For example, a cone may be imagined beginning at the camera lens and expanding outward with respect to the front face of the lens; the farther away from the lens, the greater the radius/circumference of the camera-lens aperture 816.

As shown in FIGS. 9, 12, and 13, back face 810 has an upper tier 812 and a lower tier 814. Upper tier 812 is arranged to create a space between the smartphone and protective case 800 for placement of a satellite communication or other device and a battery pack or other power source the satellite communication or other device. Back face 810 has windows 816 to allow for the functions from the back face of a smartphone or other device, (e. g., a camera) and for controls of the satellite communication or other device. As shown in FIG. 9, the windows of a preferred embodiment are arranged to allow functionality of, for example, a SPOT II SATELLITE GPS MESSENGER, with the communication module removed from its housing, and for the camera of the IPHONE. One or more of windows 816 may be covered by slides. The slides may serve as protection from accidentally accessing and/or protecting the functions (e.g., buttons, ports, and/or jacks) of the satellite communication device. The slides may be secured to protective case 800 by a backing that connects to the case. The slides can move to open and close windows 816.

The specific placement of the satellite communication device with respect to the protective case 800 allows for functionality of a smartphone and communications from a satellite communication device. The satellite communication device is secured to a protective case 800 by, for instance, one or more small screws into threaded holes in the protective case 800. In other embodiments, the satellite communication device could be attached to the protective case 800 by other means, including different fasteners or by a pre-formed construction enclosing the satellite communication device by a protective case 800. Attachments could be formed of Velcro materials and can be of the same color and material as case 800 or of different or contrasting colors or materials. Protective case 800 may be secure to a satellite communication device or to other device by magnetic means. There may be magnets, including for example a magnetic plate substantially the same dimensions as bottom face 804 and securing magnetically to bottom face 804 to substantially share one to all four edges therewith. Such an arrangement can be used to secure protective case 800 containing a smartphone to a band around the arm of a user, for example, while the user jogs or exercises. The threaded holes may be arranged such that, when the satellite communication device is attached to protective case 800 and the smartphone is placed substantially within the protective case 800, a small space remains above the satellite patch antenna sufficient to prevent the detuning of the patch antenna. In such embodiments, using the IPHONE and the SPOT II SATELLITE GPS MESSENGER (or similar devices), the spacing is between about 1 mm and 3 mm in thickness. Further, the threaded holes and upper tier 812 may be arranged such that the satellite communication device is secured at a location that is above the area typically held by one's hand when on a phone call. This placement helps the functionality of the satellite communication device because the antenna of the satellite communication device will not detune due to the presence of a user's hand covering the antenna and thus causing degradation. With this placement, the patch antenna can be in a compact and convenient arrangement and function with minimal interference and without detuning. The compact design of protective case 800 allows for the use of a space-reducing antenna such as the patch antenna employed in the SPOT II SATELLITE GPS MESSENGER. Omnidirectional antennas, as the name implies, are designed to send and receive signals 360-degrees around the antenna, meaning that these antennas, also known as helical antennas, can receive signals from any direction. Semi-directional antennas, such as a patch antenna, send and receive signals in a 180-degree pattern and are therefore more focused in directing a signal than omnidirectional antennas, like the helical antenna. Larger antenna can be less practical. For example, a helical antenna embedded into the face of the protective case may be ineffective because the signal could be blocked by both the smartphone and the user's head when the phone was held up to the user's ear.

Satellite communications devices such as the SPOT CONNECT often locate a power source (generally battery cells) in a daughter board substantially parallel with and adjacent to a mother board. In one embodiment of protection case 800, the battery cells are located within protective case 800 adjacent to bottom face 804 and on a plane similar to that of the mother board of satellite communications device. Power is transmitted from the battery cells to the satellite communications device via a wired or other connection. In such arrangements, the thickness of the satellite communication device, as integrated into one embodiment of case 800, is substantially less than the thickness of the satellite communications device as it is commercially sold in its own housing. This allows one preferred embodiment to be thinner because the satellite communications device with its power source are arranged in a shape that closely mimics the shape of typical commercially available smartphones.

As shown in FIG. 10 and FIG. 11, top face 802, bottom face 804, left face 806, and right face 808 each may have holes to allow for the functionality of the smartphone. For example, as shown in FIG. 11, bottom face 804 has a hole such that a smartphone can attach to an electrical power source, the right face 808 has a hole to allow access to a volume button and top face 802 has a hole to allow access to an earphone jack or power button. Of course, these holes can be differently placed depending on the configuration of the intended smartphone to be used. The protective case 800 can be modified to carry a variety of different communication devices while still allowing for the operability of a smartphone or other device. For example, protective case 800 can be modified for use with a satellite telephone or a terrestrial telephone (if, e.g., a user has one phone for business use and another for personal use). Further, protective case 800 can be used with two communication devices that allow for inter-communication between the devices. For another example, a satellite communication device can be the SPOT CONNECT, which enables connection by BLUETOOTH to a smartphone. Thus, protective case 800 is extremely versatile and allows for convenient methods to communicate certain messages from a smartphone, which is traditionally not capable of communication through the satellite path, via satellite. In each arrangement, protective case 800 should secure a communication device such that the patch antenna is located at a position that does not detune and that no contact occurs between the smartphone housing and the other chosen satellite communication device.

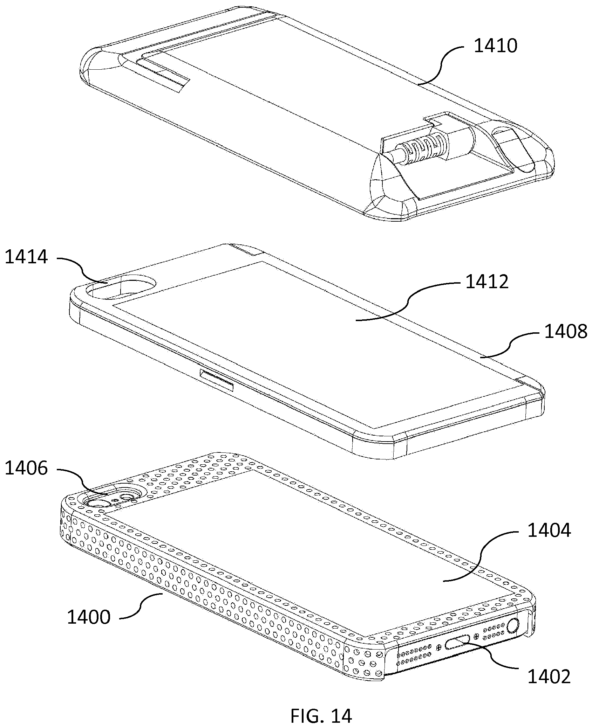

In various embodiments, more than one article or device may be attached to or stacked on a case for an electronic device. FIG. 14 illustrates a smartphone case 1400 attached to a smartphone 1402. As described above, a face 1404 of the case 1400 may include a magnet or magnets and an aperture 1406 for a camera lens disposed in the smartphone 1402. A first article 1408 attaches to the face 1404 of the case 1400 via the magnetic force exerted between one or more magnets in the first article 1408 and the one or more magnets in the case 1400. A second article 1410 may be attached to a face 1412 of the first article 1408. The second article 1410 also includes one or more magnets; these magnets create a magnetic force, sufficient to attach the second article 1410 to the first article 1408, relative to magnets in the first article 1408 (which may be the same or different magnets used to attach the first article 1408 to the case 1400) and/or magnets in the case 1400.

In this embodiment, the first article 1408 is a storage article for storing, e.g., a credit card and/or key, and the second article 1410 is a credit-card reader. The present invention is not limited to any particular kind of first 1408 and second 1410 articles, however, and any combination or type of articles is within the scope of the present invention. The second article 1410 may be, for example, a decorative plate. In one embodiment, the outer face 1412 of the first article 1408 may include a design, photo, logo, or other embellishment that is presented when only the first article 1408 (and not the second article 1410) is attached to the case 1400.

In various embodiments, the first article 1408 is specially designed to receive the second article 1410; in other embodiments, the second article 1410 attaches to the first article 1408 without any special design. For example, the first article 1408 may be designed to have additional magnets and/or mechanical guides (grooves, ridges, posts, divots, lips, etc.) to facilitate attachment of the second article 1410; on the other hand, especially if the first article 1408 is thin and/or the magnets in the case 1400 are strong enough, the second article 1410 may be attached to the first article 1408 without any of these additional features.

Similarly, the second article 1410 may be designed to specifically be attached to the first article 1408; in other embodiments, the case 1400 and the first article 1408 have similar properties (e.g., magnet strength, position, grooves, ridges, lips, etc.) such that that second article 1410 attaches similarly to both the case 1400 and the first article 1408.

In various embodiments, the articles 1408, 1410 include features to allow access to, operate, or otherwise use functions of the electronic device. For example, the first article may include an aperture 1414 to allow access to a camera lens on the smartphone (via the aperture 1406 on the case 1400). As described above, the aperture 1414 on the first article 1408 may be larger in radius/circumference than the aperture 1406 on the case 1400; an aperture (not shown) on the second article 1410 is larger still.

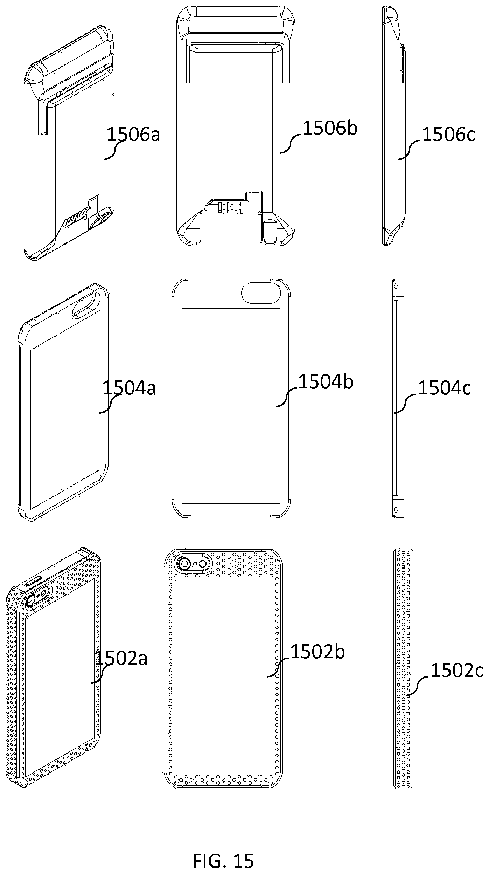

FIG. 15 illustrates angle 1502a, front 1502b, and side 1502c views of the case 1400; angle 1504a, front 1504b, and side 1504c views of the first article 1408; and angle 1506a, front 1506b, and side 1506c views of the second article 1410.

## Claims

1. A system comprising a protective case (300) and an article (340), the protective case (300) being configured to receive a mobile device and to attach to the article (340), the protective case (300) comprising:
a back face (304) mechanically connected to a plurality of side faces (313, 315), an interior surface of the back face (304) being in touch with a back surface of the mobile device when the mobile device is placed within the protective case (300);
a back plate (302) for coupling the article (340) to the protective case (300), wherein the back plate (302) is detachably attached to and in touch with an exterior surface of the back face (304) when the article (340) is coupled to the back face (304) of the protective case (300) through the back plate (302), wherein the back plate (302) is detachably attached to the article (340); and
a front face (303) being substantially open to allow access to a front surface of the mobile device when the mobile device is placed within the protective case (300);
wherein the article comprises a satellite communication device comprising a patch antenna, and wherein the protective case is configured to position the satellite communication device relative to the mobile device such that a space between 1mm and 3mm in size remains between the patch antenna and the exterior surface of the back face to substantially prevent detuning of the patch antenna when the mobile device and the satellite communication device are active.

2. The system of claim 1, further comprising a mechanical means for preventing the mobile device and the article from sliding relative to each other.

3. The system of claim 2, wherein the mechanical means comprises a lip, groove, trench, stud, or divot.

4. The system of claim 1, wherein the back face comprises an aperture for allowing light to strike a camera lens disposed in or on the mobile device.

5. The system of claim 1, wherein the back face comprises an aperture for allowing access to a docking port disposed in or on the mobile device, and the article is detached from the protective case to permit docking.

6. The system of claim 1, wherein components of the article are disposed in a plane parallel to the back plate.

7. The system of claim 6, wherein the components of the article comprise a battery and a circuit board.

8. The system of claim 1, wherein the article is a first article coupled to the back face of the protective case through the back plate, the back plate being configured to couple a second article to the protective case through the back plate and the first article such that the first article is positioned between the back plate and the_second article when the first article and the second article are coupled to the protective case.

9. The system of claim 8, wherein the second article is magnetically attached to the first article when the second article is coupled to the back face of the protective case through the first article and the back plate.

10. The system of claim 1, wherein the back face comprises at least one magnet for magnetically coupling the article to the protective case, the article comprising at least one magnet.

11. The system of claim 10, wherein the magnets are selected based on one or more of size, position and strength so that a strength of the magnetic attraction between the magnet at the back plate and the magnet at the article is based on user preference.

12. The system of claim 10, wherein at least one of the magnets is a sheet magnet or discrete magnet.

## Patentansprüche

1. System, das eine Schutzhülle (300) und einen Artikel (340) umfasst, wobei die Schutzhülle (300) dafür konfiguriert ist, ein Mobilgerät aufzunehmen und an dem Artikel (340) befestigt zu werden, wobei die Schutzhülle (300) Folgendes umfasst:
eine Rückseite (304), die mechanisch mit mehreren Seitenflächen (313, 315) verbunden ist, wobei sich eine Innenfläche der Rückseite (304) in Berührung mit einer hinteren Fläche des Mobilgeräts befindet, wenn das Mobilgerät innerhalb der Schutzhülle (300) platziert ist,
eine Rückplatte (302) zum Koppeln des Artikels (304) an die Schutzhülle (300), wobei die Rückplatte (302) lösbar an einer Außenfläche der Rückseite (304) befestigt und in Berührung mit derselben ist, wenn der Artikel (340) durch die Rückplatte (302) an die Rückseite (304) der Schutzhülle (300) gekoppelt ist, wobei die Rückplatte (302) lösbar an dem Artikel (340) befestigt ist,
und
eine Vorderseite (303), die im Wesentlichen offen ist, um einen Zugang zu einer Frontfläche des Mobilgeräts zu ermöglichen, wenn das Mobilgerät innerhalb der Schutzhülle (300) platziert ist,
wobei der Artikel ein Satellitenkommunikationsgerät umfasst, das eine Patchantenne umfasst, und wobei die Schutzhülle dafür konfiguriert ist, das Satellitenkommunikationsgerät im Verhältnis zu dem Mobilgerät derart zu positionieren, dass ein Raum zwischen 1 mm und 3 mm in der Größe zwischen der Patchantenne und der Außenfläche der Rückseite bleibt, um im Wesentlichen ein Verstimmen der Patchantenne zu verhindern, wenn das Mobilgerät und das Satellitenkommunikationsgerät aktiv sind.

2. System nach Anspruch 1, das ferner ein mechanisches Mittel zum Verhindern, dass sich das Mobilgerät und der Artikel im Verhältnis zueinander verschieben, umfasst.

3. System nach Anspruch 2, wobei das mechanische Mittel eine Lippe, eine Rille, einen Graben, einen Zapfen oder eine Vertiefung umfasst.

4. System nach Anspruch 1, wobei die Rückseite eine Öffnung zum Ermöglichen, dass Licht auf ein Kameraobjektiv trifft, das in oder an dem Mobilgerät angeordnet ist, umfasst.

5. System nach Anspruch 1, wobei die Rückseite eine Öffnung zum Ermöglichen eines Zugangs zu einem Andockanschluss, der in oder an dem Mobilgerät angeordnet ist, umfasst und der Artikel von der Schutzhülle gelöst wird, um ein Andocken zu ermöglichen.

6. System nach Anspruch 1, wobei Bauteile des Artikels in einer Ebene, parallel zu der Rückplatte, angeordnet sind.

7. System nach Anspruch 6, wobei die Bauteile des Artikels eine Batterie und eine Leiterplatte umfassen.

8. System nach Anspruch 1, wobei der Artikel ein erster Artikel ist, der durch die Rückplatte an die Rückseite der Schutzhülle gekoppelt ist, wobei die Rückplatte dafür konfiguriert ist, einen zweiten Artikel durch die Rückplatte und den ersten Artikel derart an die Schutzhülle zu koppeln, dass der erste Artikel zwischen der Rückplatte und dem zweiten Artikel angeordnet ist, wenn der erste Artikel und der zweite Artikel an die Schutzhülle gekoppelt sind.

9. System nach Anspruch 8, wobei der zweite Artikel magnetisch an dem ersten Artikel befestigt ist, wenn der zweite Artikel durch den ersten Artikel und die Rückplatte an die Rückseite der Schutzhülle gekoppelt ist.

10. System nach Anspruch 1, wobei die Rückseite wenigstens einen Magneten zum magnetischen Koppeln des Artikels an die Schutzhülle umfasst, wobei der Artikel wenigstens einen Magneten umfasst.

11. System nach Anspruch 10, wobei die Magneten auf der Grundlage eines oder mehrerer von Größe, Position und Stärke ausgewählt sind, so dass eine Stärke der magnetischen Anziehung zwischen dem Magneten an der Rückplatte und dem Magneten an dem Artikel auf Benutzerpräferenz beruht.

12. System nach Anspruch 10, wobei wenigstens einer der Magneten ein Folienmagnet oder ein diskreter Magnet ist.

## Revendications

1. Système, comprenant un boîtier de protection (300) et un article (340), le boîtier de protection (300) étant configuré pour recevoir un appareil mobile et pour être fixé sur l'article (340), le boîtier de protection (300) comprenant :
une face arrière (304) connectée mécaniquement à plusieurs faces latérales (313, 315), une surface interne de la face arrière (304) étant en contact avec une surface arrière de l'appareil mobile lorsque l'appareil mobile est placé dans le boîtier de protection (300) ;
une plaque arrière (302) pour accoupler l'article (340) au boîtier de protection (300), dans lequel la plaque arrière (304) est fixée de manière détachable sur une surface externe de la face arrière (304) et en contact avec celle-ci lorsque l'article (340) est accouplé à la face arrière (304) du boîtier de protection (300) à travers la plaque arrière (304), dans lequel la plaque arrière (302) est fixée de manière détachable sur l'article (340) ; et
une face avant (303) sensiblement ouverte pour permettre l'accès à une surface avant de l'appareil mobile lorsque l'appareil mobile est placé dans le boîtier de protection (300) ;
dans lequel l'article comprend un dispositif de communication par satellite comprenant une antenne patch, et dans lequel le boîtier de protection est configuré pour positionner le dispositif de communication par satellite par rapport à l'appareil mobile de sorte qu'un espace d'une taille entre 1 mm et 3 mm est maintenu entre l'antenne patch et la surface externe de la face arrière, afin d'empêcher sensiblement un désaccord de l'antenne patch lorsque l'appareil mobile et le dispositif de communication par satellite sont actifs.

2. Système selon la revendication 1, comprenant en outre un moyen mécanique pour empêcher un glissement de l'appareil mobile et de l'article l'un par rapport à l'autre.

3. Système selon la revendication 2, dans lequel le moyen mécanique comprend une lèvre, une rainure, un sillon, un goujon ou un évidement.

4. Système selon la revendication 1, dans lequel la face arrière comprend une ouverture pour permettre à la lumière de frapper un objectif de caméra disposé dans ou sur l'appareil mobile.

5. Système selon la revendication 1, dans lequel la face arrière comprend une ouverture pour permettre l'accès à un port d'accueil disposé dans ou sur l'appareil mobile, l'article étant détaché du boîtier de protection pour permettre l'accueil.

6. Système selon la revendication 1, dans lequel des composants de l'article sont disposés dans un plan parallèle à la plaque arrière.

7. Système selon la revendication 6, dans lequel les composants de l'article comprennent une batterie et une carte de circuit imprimé.

8. Système selon la revendication 1, dans lequel l'article est un premier article accouplé à la face arrière du boîtier de protection à travers la plaque arrière, la plaque arrière étant configurée pour accoupler un deuxième article au boîtier de protection à travers la plaque arrière et le premier article, de sorte que le premier article est positionné entre la plaque arrière et le deuxième article lorsque le premier article et le deuxième article sont accouplés au boîtier de protection.

9. Système selon la revendication 8, dans lequel le deuxième article est fixé magnétiquement sur le premier article lorsque le deuxième article est accouplé à la face arrière du boîtier de protection à travers le premier article et la plaque arrière.

10. Système selon la revendication 1, dans lequel la face arrière comprend au moins un aimant pour assurer l'accouplement magnétique de l'article au boîtier de protection, l'article comprenant au moins un aimant.

11. Système selon la revendication 10, dans lequel les aimants sont sélectionnés sur la base d'un ou de plusieurs critères incluant la taille, la position et la force, de sorte que la force de l'attraction magnétique entre l'aimant et la plaque arrière et l'aimant au niveau de l'article est basée sur la préférence de l'utilisateur.

12. Système selon la revendication 10, dans lequel au moins un des aimants est un aimant en feuille ou un aimant discret.
